# EUROPÄISCHE PATENTSCHRIFT

(11) **EP 2 694 231 B1**
(45) Veröffentlichungstag und Bekanntmachung des Hinweises auf die Patenterteilung: **17.06.2015**
(21) Anmeldenummer: 12714644.7
(22) Anmeldetag: 05.04.2012
(51) Int. Cl.: B21D 43/05

(54) **TRANSFEREINRICHTUNG FÜR EINE PRESSE ODER PRESSENSTRAßE MIT ACHSANTRIEB UND AUSWECHSELBAREM GRUNDTRÄGER**
TRANSFER ARRANGEMENT FOR A PRESS OR PRESS LINE WITH AN AXIAL DRIVE AND INTERCHANGEABLE BASE SUPPORT
DISPOSITIF DE TRANSFERT POUR UNE PRESSE OU UN TRAIN DE PRESSES COMPRENANT UNE TRANSMISSION ET SUPPORT DE BASE ÉCHANGEABLE

(30) Priorität: 08.04.2011 DE 102011001924
(43) Veröffentlichungstag der Anmeldung: 12.02.2014
(73) Patentinhaber: Schuler Pressen GmbH, 73033 Göppingen (DE)
(72) Erfinder: GEBHARD, Markus, 89558 Böhmkirch-Treffelhausen (DE)
(74) Vertreter: Rüger, Barthelt & Abel
(86) Internationale Anmeldenummer: PCT/EP2012/056250
(87) Internationale Veröffentlichungsnummer: WO 2012/136750

(56) Entgegenhaltungen:
- EP-A1- 1 862 237
- EP-A2- 0 818 254
- DE-B3- 10 324 272
- US-B1- 6 244 814

## Beschreibung

Die Erfindung betrifft einen Grundträger für eine Transfereinrichtung sowie eine Transfereinrichtung zum Transportieren und/oder Ausrichten eines Werkstücks. Bei dem Werkstück handelt es sich insbesondere um ein Blech oder ein bereits vorbearbeitetes Blechteil, das einer Presse oder einer Pressenstufe einer Pressenstraße zur Weiterbearbeitung zugeführt und in eine Bearbeitungsposition eingelegt wird. Die Transfereinrichtung weist hierfür wenigstens eine in mehrere Raumrichtungen bewegbare und/oder verschwenkbare Quertraverse auf. An der Quertraverse ist ein auswechselbarer Grundträger über eine Kopplungseinrichtung lösbar gekoppelt. Der Grundträger trägt eine Werkstückgreifeinrichtung zum Greifen des Werkstücks. Die Transfereinrichtung ist dazu vorgesehen und eingerichtet, den Grundträger selbsttätig auswechseln zu können. D.h. ein angekoppelter Grundträger kann abgelegt und ein neuer Grundträger kann angekoppelt werden.

Eine solche Transfereinrichtung ist beispielsweise aus der DE 10 2006 025 272 B3 bekannt. Durch Bewegungen der Quertraverse kann der Grundträger mit der Werkstückgreifeinrichtung entriegelt und abgelegt werden und ein neuer Grundträger kann aufgenommen werden. Somit ist ein automatischer Toolingwechsel, d.h. ein automatischer Wechsel der Werkstückgreifeinrichtung mit Hilfe der Achsen der Transfereinrichtung möglich.

Aus DE 100 09 574 A1 ist eine Transfereinrichtung für eine Presse bekannt. An der Quertraverse sind beweglich angeordnete werkstückspezifische Saugtraversen vorhanden, wobei die Saugtraversen eine Werkstückgreifeinrichtung darstellen. Zum Bewegen oder Schwenken der Saugtraversen ist an der Quertraverse ein Spindel-Mutter-System angeordnet. Dieses Spindel-Mutter-System kann durch einen Antrieb betätigt werden, der an einem schwenkbaren Lagerbock angeordnet ist. Am schwenkbaren Lagerbock 17 wird die Quertraverse befestigt.

Ein Grundträger für eine Transfereinrichtung nach dem Oberbegriff des Patentanspruches 1 ist aus EP 0 818 254 A2 bekannt.

Ausgehend von diesem bekannten Stand der Technik kann es als eine Aufgabe der vorliegenden Erfindung angesehen werden, die Flexibilität der Transfereinrichtung zu vergrößern und insbesondere einen automatischen Wechsel der Werkstückgreifeinrichtung durch die Achsantriebe der Transfereinrichtung bzw. der Quertraverse zu verbessern.

Diese Aufgabe wird durch einen Grundträger für eine Transfereinrichtung mit den Merkmalen des Patentanspruches 1 und eine Transfereinrichtung mit einem solchen Grundträger gelöst.

Bei der vorliegenden Erfindung weist die Kopplungseinrichtung zur lösbaren Kopplung des mit einer antreibbaren Welle ausgestatteten Grundträgers mit der Quertraverse ein Verbindungsmittel und ein Kupplungsmittel auf. Das Verbindungsmittel der Quertraverse dient zum Zusammenwirken mit einem Gegenverbindungsmittel am Grundträger. Über das Verbindungsmittel und das Gegenverbindungsmittel wird eine lösbare mechanische Befestigung zwischen Grundträger und Quertraverse erreicht. Die mechanische Verbindung zwischen Quertraverse und Grundträger kann durch einen lineare Bewegung bzw. eine Abfolge von linearen Bewegungen der Quertraverse hergestellt bzw. gelöst werden.

Das Kupplungsmittel der Quertraverse dient zum Zusammenwirken mit einem Gegenkupplungsmittel am Grundträger. Das Kupplungsmittel ist durch einen Antriebsmotor der Quertraverse antreibbar und insbesondere unmittelbar mit der Motorwelle des Antriebsmotors verbunden und kann dabei koaxial zur Motorwelle angeordnet sein. Das Kupplungsmittel und das Gegenkupplungsmittel stellen im Kupplungszustand eine drehfeste Verbindung zwischen dem Antriebsmotor der Quertraverse und der Welle des Grundträgers her. Vorzugsweise wird dabei eine Drehverbindung in beide Drehrichtungen hergestellt. In Axialrichtung können das Kupplungsmittel und das Gegenkupplungsmittel bei hergestellter Kupplung in Kontakt miteinander stehen, wobei jedoch keine zugfeste Verbindung in Axialrichtung hergestellt wird. Es ist daher möglich, auf einfache Weise selbsttätig durch die Bewegung der Quertraverse eine mechanische Verbindung zwischen Grundträger und Quertraverse und gleichzeitig eine Kupplung zwischen antreibbarer Welle und Antriebsmotor herzustellen bzw. zu lösen. Über den Antriebsmotor der Quertraverse und die antreibbare Welle am Grundträger kann eine am Grundträger angeordnete Werkstückgreifeinrichtung bewegt und/oder verschwenkt werden, insbesondere um vorgegebene Positionierung oder Ausrichtung des Werkstücks zu erreichen. Hierfür muss nicht die gesamte Quertraverse bewegt werden, sondern lediglich die Werkstückgreifeinrichtung am Grundträger.

Weist eine Transfereinrichtung mehrere insbesondere an einem gemeinsamen Teil gelagerte und relativ zueinender nur eingeschränkt bewegbare Quertraversen auf, lassen sich durch die erfindungsgemäße Ausgestaltung sehr einfach die beiden Werkstückgreifeinrichtungen unabhängig voneinander in verschiedene Positionen oder Lagen bringen.

Es kann vorteilhaft sein, wenn das Verbindungsmittel mit dem Gegenverbindungsmittel und das Kupplungsmittel mit dem Gegenkupplungsmittel durch eine Relativbewegung der Quertraverse und vorzugsweise eine lineare Relativbewegung der Quertraverse relativ zum Grundträger in einer Kopplungsrichtung gekoppelt werden kann. Umgekehrt kann die Kopplung durch eine entgegengesetzte Bewegung gelöst werden. Nach dem Koppeln kann durch das Anheben des angekoppelten Grundträgers eine Verriegelung zwischen dem Verbindungsmittel und dem Gegenverbindungsmittel hergestellt werden. Vor dem Entkoppeln kann durch das Absetzen des Grundträgers auf einer Abstellfläche eine Entriegelung des Verbindungsmittels und des Gegenverbindungsmittels erfolgen, so dass durch eine gegen die Kopplungsrichtung gerichtete Relativbewegung zwischen Quertraverse und Grundträger eine Entkopplung stattfinden kann. Die Kopplungsrichtung verläuft bevorzugt parallel zur Längsachse der Quertraverse.

Beim bevorzugten Ausführungsbeispiel weist die Transfereinrichtung eine Steuereinheit auf, die zur Steuerung der Bewegung und/oder der Position der Quertraverse und zur Ansteuerung des Antriebsmotors der Quertraverse eingerichtet ist. Über die Steuereinheit kann die Quertraverse daher zum Ablegen und zum Aufnehmen eines Grundträgers gesteuert bewegt werden. Dabei ist es vorteilhaft, wenn die Steuereinheit zur Herstellung der Kupplung zwischen dem Kupplungsmittel und dem Gegenkupplungsmittel das mit dem Antriebsmotor verbundene Kupplungsmittel in eine vorgegebene Kupplungsstellung bringt. Die Kupplungsstellung entspricht dabei einer bevorzugten Drehstellung des Kupplungsmittels um die Antriebsachse des Antriebsmotors.

Als Antriebsmotor dient vorzugsweise ein Elektromotor, insbesondere ein Servomotor.

Bei einem bevorzugten Ausführungsbeispiel weisen die Kupplungsmittel ein Entriegelungsmittel auf, das bei der Herstellung der drehfesten Kupplung mit dem Gegenkupplungsmittel eine Drehverriegelung der Gegenkupplungsmittel aufhebt. Im entkuppelten Zustand ist die Drehbewegung des Gegenkupplungsmittels blockiert, um das Gegenkupplungsmittel in einer Drehposition zu halten, in der das Kupplungsmittel axial ankuppelbar ist. Durch die Herstellung der Kupplung wird diese Drehverriegelung des Gegenkupplungsmittels aufgehoben, so dass eine Drehung der Welle über den Antriebsmotor ermöglicht wird.

Die Quertraverse ist vorzugsweise nur an einem ihrer beiden Längsenden gelagert. Dadurch wird das Positionieren und Ausrichten der Quertraverse vereinfacht. Im Unterschied zu zweiseitigen Lagerungen ist eine Längenänderung der Quertraverse abhängig von der Schrägstellung nicht erforderlich.

Vorzugsweise weist die Transfereinrichtung mehrere unterschiedliche Grundträger bzw. Grundträgertypen auf. Abhängig vom Einsatz und von der Anwendung der Transfereinrichtung an einer Presse oder einer Pressenstraße zwischen zwei Pressenstufen kann dann wahlweise der jeweils erforderliche Grundträger angekoppelt und verwendet werden. Die Transfereinrichtung lässt sich dadurch auch während des Betriebs schnell und einfach an unterschiedliche Werkstücke anpassen. Z.B. kann bei einem automatischen Werkzeugwechsel der Presse bzw. der Pressenstraße auch der Grundträger der Transfereinrichtung automatisch ausgewechselt werden.

Am Grundträger ist ein Verriegelungsmittel vorhanden, das im getrennten Zustand des Gegenkupplungsmittels von dem Kupplungsmittel die Drehstellung des Gegenkupplungsmittels in einer Kupplungsstellung fixiert. Das Verriegelungsmittel weist wenigstens einen Verriegelungsvorsprung auf, der in der Verriegelungsstellung in eine mit Abstand zur Drehachse angeordnete Verriegelungsausnehmung am Gegenkupplungsmittel eingreift. Auf diese Weise kann eine Drehbewegung des Gegenkupplungsmittels blockiert werden, so dass das Gegenkupplungsmittel in einer Stellung fixiert wird, in der ein Ankuppeln mit dem Kupplungsmittel möglich ist. Die Verriegelungsstellung kann dabei sehr einfach dadurch hergestellt werden, dass das Verriegelungsmittel durch eine Vorspannanordnung in seine Verriegelungsstellung vorgespannt ist. Die Vorspannanordnung kann beispielsweise eine Feder oder ein anderes elastisches Element zur Herstellung der Vorspannkraft aufweisen.

Bei einer bevorzugten Ausführungsform ist die antreibbare Welle als Gewindespindel ausgeführt. Auf der Gewindespindel sitzt eine Spindelmutter, die ein durch die Welle bewegbares Abtriebsteil darstellt. Das Abtriebsteil dient zum Bewegen oder Schwenken der Werkstückgreifeinrichtung und ist daher über ein Getriebe mit der Werkstückgreifeinrichtung verbunden. Die Gewindespindel und die Spindelmutter benötigen lediglich einen geringen Bauraum am Grundträger. Außerdem kann die Kopplung zwischen der Gewindespindel und der Spindelmutter selbsthemmend ausgeführt werden, so dass der Antriebsmotor im Betrieb keine Drehmomente aufnehmen muss und daher ausschließlich zur Verstellung der Werkstückgreifeinrichtung betätigt werden muss. Zusätzlich oder alternativ kann auch das Getriebe zwischen dem Abtriebsteil und der Werkstückgreifeinrichtung selbsthemmend ausgeführt sein.

Über das Getriebe kann eine lineare Bewegung der Werkstückgreifeinrichtung und/oder eine Schwenkbewegung der Werkstückgreifeinrichtung verursacht werden. Bei einer Ausführung kann am Grundträger ein linear verschiebbar gelagerter Trägerschlitten angeordnet sein, der die Werkstückgreifeinrichtung trägt. Alternativ oder zusätzlich kann die Werkstückgreifeinrichtung um eine Schwenkachse schwenkbar gelagert sein. Das Abtriebsteil kann dann mit einem an der Werkstückgreifeinrichtung angeordneten Schwenkelement an einer zur Schwenkachse beabstandeten Stelle verbunden sein.

Vorteilhafte Ausgestaltungen der Erfindung ergeben sich aus den abhängigen Patentansprüchen sowie der Beschreibung. In der Beschreibung ist die Erfindung anhand eines bevorzugten Ausführungsbeispiels erläutert. Die Beschreibung beschränkt sich auf die wesentlichen Merkmale der Erfindung. Die Zeichnung ist ergänzend heranzuziehen. Es zeigen:
Fig. 1 eine schematische blockschaltbildähnliche Darstellung eines Ausführungsbeispiels der Transfereinrichtung,
Fig. 2 eine perspektivische Teildarstellung einer Quertraverse der Transfereinrichtung nach Fig. 1,
Fig. 3 eine perspektivische Darstellung eines Ausführungsbeispiels eines Grundträgers,
Fig. 4 eine perspektivische Darstellung eines Ausführungsbeispiels einer Werkstückgreifeinrichtung,
Fig. 5 eine perspektivische Darstellung der Ausführung der Quertraverse nach Fig. 2 mit einem angekuppelten Grundträger,
Fig. 6 ein Ausführungsbeispiel eines Grundträgers mit schwenkbarer Werkstückgreifeinrichtung gemäß Fig. 5 in perspektivischer Darstellung,
Fig. 7 eine weitere Ausführungsform eines Grundträgers mit schwenkbarer Werkstückgreifeinrichtung in perspektivischer Darstellung,
Fig. 8 ein weiteres Ausführungsbeispiel eines Grundträgers mit einem Trägerschlitten zum Verschieben einer Werkstückgreifeinrichtung,
Fig. 9 eine schematische blockschaltbildähnliche, teilgeschnittene Darstellung eines ersten Ausführungsbeispiels einer Kupplungseinrichtung im entkuppelten Zustand,
Fig. 10 die Darstellung der Kupplungseinrichtung aus Fig. 9 im Kupplungszustand,
Fig. 11 eine schematische, blockschaltbildähnliche, teilgeschnittene Darstellung eines zweiten Ausführungsbeispiels einer Kupplungseinrichtung im entkuppelten Zustand,
Fig. 12 die Darstellung der Kupplungseinrichtung aus Fig. 11 im Kupplungszustand und
Figur 13 eine schematische blockschaltbildähnliche Darstellung eines Verriegelungsmechanismus zur Herstellung einer Verriegelung zwischen einem Verbindungsmittel und einem Gegenverbindungsmittel.

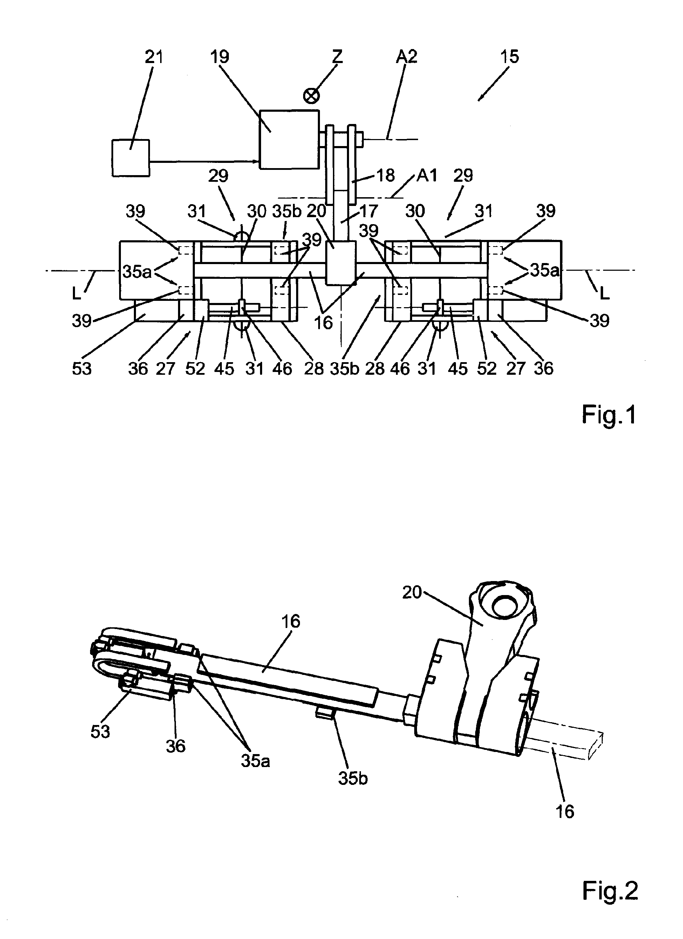

In Figur 1 ist nach Art eines Blockschaltbilds ein Ausführungsbeispiel einer Transfereinrichtung 15 veranschaulicht. Die Transfereinrichtung 15 dient zum Transport und der Positionierung eines nicht näher gezeigten Werkstücks, insbesondere eines Blechteils zu einer nachfolgenden Presse bzw. Pressenstufe. Die Transfereinrichtung nimmt ein Blechteil in einer Aufnahmeposition auf und legt es in der gewünschten Bearbeitungsposition in die Presse bzw. Pressenstufe ein.

Die Transfereinrichtung 15 weist eine in mehrere Raumrichtungen drehbare und/oder schwenkbare Quertraverse 16 auf. Die Quertraverse ist beim Ausführungsbeispiel um ihre Längsachse L drehbar an einem Arm 17 gelagert. Bei dem hier beschriebenen bevorzugten Ausführungsbeispiel sind an einem Arm 17 zwei Quertraversen 16 angeordnet. Die Längsachsen L der beiden Quertraversen 16 fluchten. Die beiden Quertraversen 16 sind relativ zueinander unbeweglich. Der Arm 17 ist um eine erste Achse A1 schwenkbar an einem Schwenkhebel 18 gelagert. Der Schwenkhebel 18 ist um eine zweite Achse A2 schwenkbar und in eine Höhenrichtung Z linear verstellbar an einer Säule 19 gelagert. Die erste Achse A1 und die zweite Achse A2 sind parallel zueinander ausgerichtet. Beim Ausführungsbeispiel weist der Arm 17 ein drehbar gelagertes Lagerteil 20 auf, an den die beiden Quertraversen 16 um ihre jeweilige Längsachse L drehbar angeordnet sind.

Es versteht sich, dass alternativ zu dem hier beschriebenen Ausführungsbeispiel unterschiedlich viele Schwenk- oder Linearachsen vorhanden sein können. Die einzelnen Achsantriebe der Transfereinrichtung 15 werden durch eine Steuereinheit 21 angesteuert. Die Steuereinheit 21 kann daher die Bewegung und die Position und die Ausrichtung der Quertraversen 16 steuern.

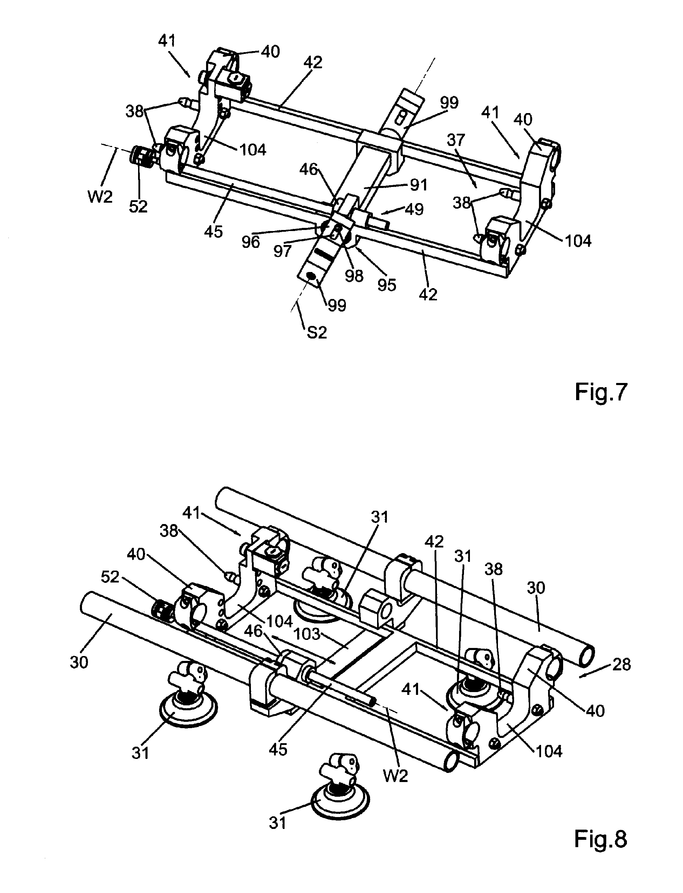

Jede Quertraverse 16 weist eine Kopplungseinrichtung 27 auf, über die ein Grundträger 28 mit der Quertraverse 16 lösbar verbunden werden kann. Am Grundträger 28 ist eine Werkstückgreifeinrichtung 29 angeordnet, die in Figur 1 sehr stark schematisiert veranschaulicht ist. Die Werkstückgreifeinrichtung 29 dient zum Halten des Werkstücks während des Transports durch die Transfereinrichtung 15. Beim Ausführungsbeispiel weist die Werkstücksgreifeinrichtung 29 hierfür einen Stab 30 auf, an dem ein oder mehrere Saugelemente 31 angeordnet sind. Durch erzeugen eines Unterdrucks an den Saugelementen 31 kann ein Werkstück in Form eines Blechteils kraftschlüssig an der Werkstückgreifeinrichtung 29 gehalten werden. Die Anzahl der Saugelemente 31 pro Werkstückgreifeinrichtung 29 kann variieren. Eine Werkstückgreifeinrichtung kann auch mehrere Stäbe 30 mit jeweils einem oder mehreren Saugelementen 31 aufweisen, wie dies beispielsweise in Figur 8 dargestellt ist.

In der schematischen Darstellung der Ausführungsbeispiele ist die Befestigung der Saugelemente 31 an den Stäben 31 nicht im Einzelnen dargestellt. Die Verbindung ist lediglich äußert schematisch strichpunktiert andeutet. Auch Saugleitungen und/oder elektrische Leitungen sind der Übersicht halber in den Zeichnungen weggelassen.

Die Kopplungseinrichtung 27 der Quertraverse 16 weist zum einen ein Verbindungsmittel 35 und zum anderen ein Kupplungsmittel 36 auf. Das Verbindungsmittel 35 dient zur Herstellung der mechanischen Verbindung zwischen dem Grundträger 28 und der Quertraverse 16. Hierfür arbeitet das Verbindungsmittel 35 mit einem Gegenverbindungsmittel 37 am Grundträger 28 zusammen. Bei dem hier beschriebenen Ausführungsbeispiel sind als Gegenverbindungsmittel 37 am Grundträger 28 mehrere parallel zueinander ausgerichtete Verbindungsstifte 38 vorhanden. Jedem Verbindungsstift 38 ist an der Quertraverse 16 ein Verbindungsloch 39 zugeordnet, in das der Verbindungsstift 38 bei hergestellter Verbindung eingreift. Die Verbindungslöcher 39 dienen als Verbindungsmittel 35. Die Verbindungsmittel 35 können in Gruppen 35a, 35b unterteilt sein und gruppenoder paarweise angeordnete Verbindungslöcher 39 aufweisen, wobei beispielsgemäß zwei Gruppen 35a, 35b mit jeweils 2 Verbindungslöchern 39 vorgesehen sind. Entsprechendes gilt für die Gegenverbindungsmittel 37.

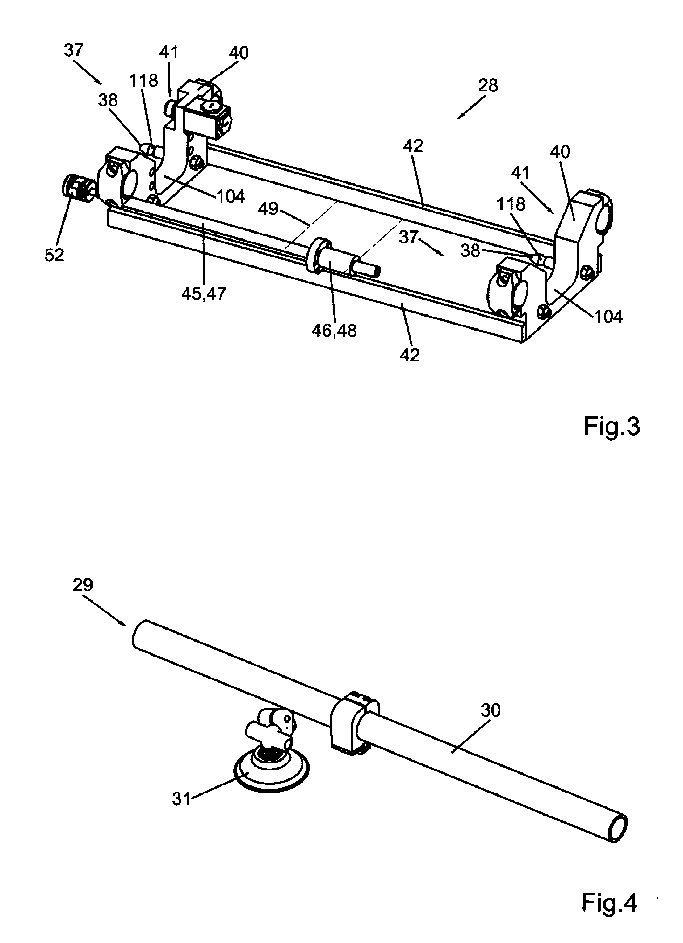

Figur 3 zeigt den prinzipiellen Aufbau eines bevorzugten Ausführungsbeispiels eines Grundträgers 28. Der Grundträger 28 weist zwei voneinander beabstandete Endstücke 40 auf, an denen die Verbindungsstifte 38 angeordnet sind. Die Verbindungsstifte 38 ragen von einer Verbindungsfläche 41 des jeweiligen Endstücks 40 in dieselbe Richtung weg. Die beiden Endstücke 40 sind über zwei im Wesentlichen parallel zueinander ausgerichtete Längsstangen 42 miteinander verbunden. Die beiden Längsstangen 42 verlaufen parallel zu den Verbindungsstiften 38.

Der Grundträger 28 weist ferner eine antreibbare Welle 45 auf, deren Drehung zur Bewegung eines Abtriebteils 46 dient. Bei dem hier beschriebenen Ausführungsbeispiel ist die Welle 45 als Gewindespindel 47 ausgeführt, auf der eine entlang der Gewindespindel 47 axial verschiebbare Spindelmutter 48 angeordnet ist. Die Spindelmutter 48 sitzt verdrehsicher auf der Gewindespindel 47. Das Abtriebsteil 46 bzw. die Spindelmutter 48 ist über ein Getriebe 49 mit der Werkstückgreifeinrichtung 29 verbunden. Die Bewegung des Abtriebsteils 46 wird über das Getriebe 49 auf die Werkstückgreifeinrichtung 29 übertragen, so dass diese linear bewegt und/oder verschwenkt werden kann. Dies wird anhand der verschiedenen Ausführungsbeispiele des Grundträgers 28 später genauer erläutert.

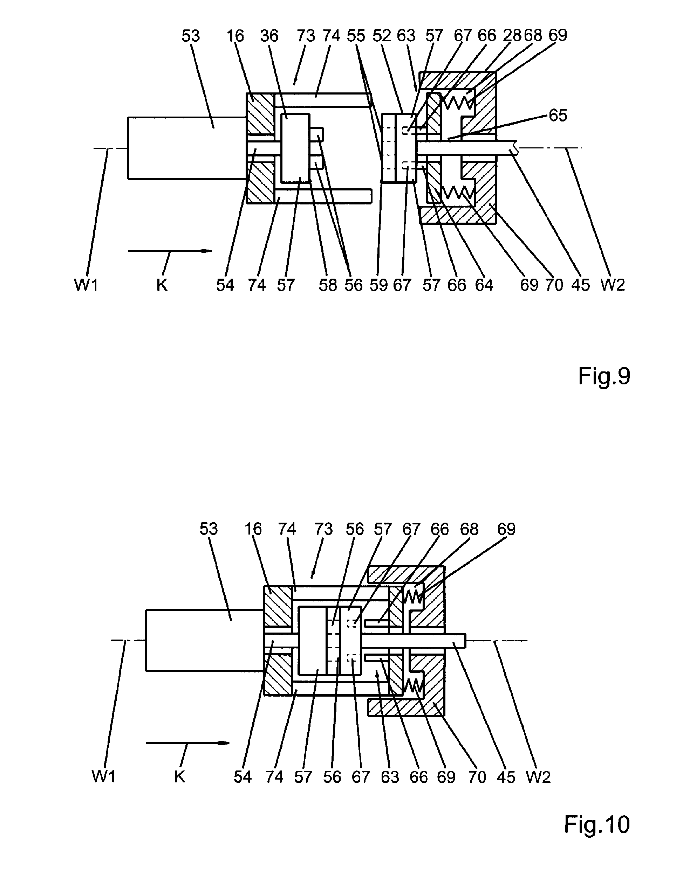

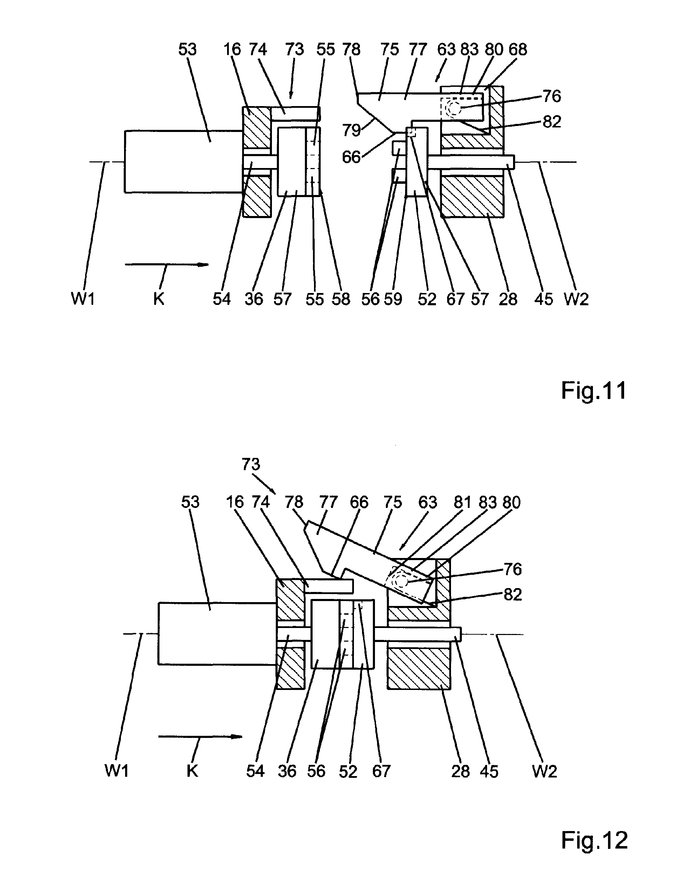

Am Grundträger 28 ist ferner ein Gegenkupplungsmittel 52 vorgesehen, das bei hergestellter Verbindung zwischen dem Grundträger 28 und der Quertraverse 16 eine drehfeste Verbindung mit dem Kupplungsmittel 36 herstellt. Das Kupplungsmittel 36 der Quertraverse 16 ist drehfest mit einem Antriebsmotor 53 verbunden. Beim bevorzugten Ausführungsbeispiel ist das Gegenkupplungsmittel 52 unmittelbar drehfest mit der Welle 45 und koaxial zu dieser angeordnet, wie dies aus den Figuren 9 bis 12 zu erkennen ist. Das Kupplungsmittel 36 sitzt auf einer Antriebswelle 54 des Antriebsmotors 53. Der Antriebsmotor 53 ist als Elektromotor und insbesondere als Servomotor ausgeführt. Bei hergestellter Kupplung zwischen dem Kupplungsmittel 36 und dem Gegenkupplungsmittel 52 stimmt die Längsachse W1 der Antriebswelle 54 mit der Längsachse W2 der angetriebenen Welle 45 überein (vergleiche Figuren 10 und 12).

Bei den hier beschriebenen Ausführungsbeispielen des Kupplungsmittels 36 bzw. des Gegenkupplungsmittels 52 wird bei hergestellter Kupplung lediglich eine Kupplung in Drehrichtung um die Längsachsen W1, W2 hergestellt. Hierfür sind entweder am Kupplungsmittel 36 oder am Gegenkupplungsmittel 52 in Richtung der Längsachse W1 bzw. W2 offene Kupplungsausnehmungen 55 vorgesehen, denen jeweils ein Kupplungsvorsprung 56 am jeweils anderen Mittel 52 bzw. 36 zugeordnet ist. Beim Ausführungsbeispiel sind zwei Kupplungsvorsprünge 56 und zwei Kupplungsausnehmungen 55 vorhanden, die diametral gegenüberliegend zu beiden Seiten der jeweiligen Längsachse W1 bzw. W2 angeordnet sind. Sowohl das Kupplungsmittel 36, als auch das Gegenkupplungsmittel 52 weisen einen im Wesentlichen zylindrischen Körper 57 auf, an dem entweder die Kupplungsvorsprünge 56 oder die Kupplungsausnehmungen 55 angeordnet sind. Beim ersten Ausführungsbeispiel gemäß der Figuren 9 und 10 ragen die Kupplungsvorsprünge 56 von einer Kupplungsfläche 58 des zylindrischen Körpers 57 des Kupplungsmittels 36 weg. Zugeordnet zu der Kupplungsfläche 58 weist der Körper 57 des Gegenkupplungsmittels 52 eine Gegenkupplungsfläche 59 auf, in der die Kupplungsausnehmungen 55 ausmünden.

Dem Gegenkupplungsmittel 52 am Grundträger 28, der in den Figuren 9 bis 12 lediglich teilweise schematisch dargestellt ist, ist ein Verriegelungsmittel 63 zugeordnet. Das Verriegelungsmittel 63 dient dazu, das Gegenkupplungsmittel 52 und beispielsgemäß den zylindrischen Körper 57 in einer vorgegebenen Drehstellung zu halten, in der eine Kupplung mit dem Kupplungsmittel 36 durch eine Relativbewegung zwischen der Quertraverse 16 und dem Grundträger 28 in Richtung der Längsachse L der Quertraverse 16 und damit in Richtung der Längsachsen W1 und W2 der Antriebswelle 54 und der angetriebenen Welle 45 möglich ist.

Ein erstes Ausführungsbeispiel des Verriegelungsmittels 63 ist in den Figuren 9 und 10 dargestellt. Die Verriegelungsmittel 63 weisen hierbei eine Platte 64 auf, die koaxial um die antreibbare Welle 45 angeordnet ist. Die Welle 45 durchsetzt die Platte 64 durch ein zentrales Loch 65. Die Platte 64 weist an ihrer dem Körper 57 des Gegenkopplungsmittels 52 zugeordneten Seite einen oder mehrere Verriegelungskörper 66 auf, wobei jedem Verriegelungskörper 66 eine Verriegelungsausnehmung 67 oder ein Verriegelungsloch im Körper 57 des Gegenkupplungsmittels 52 zugeordnet ist. Die Platte 64 ist elastisch in Richtung des Körpers 57 vorgespannt, beispielsgemäß über eine Federanordnung 68, die beispielsgemäß mehrere Schraubenfedern 69 aufweist. Die Federanordnung 68 und die Platte 64 sind beim Ausführungsbeispiel durch eine ringförmige Wandung 70 umschlossen, die im Wesentlichen koaxial zur Längsachse W2 der antreibbaren Welle 45 angeordnet ist.

In der Verriegelungsstellung gemäß Figur 9 greift die Verriegelungskörper 66, die beim Ausführungsbeispiel stiftförmige Gestalt haben, in die jeweils zugeordneten Verriegelungsausnehmungen 67 ein. Eine Drehung des Körpers 57 der Gegenkopplungsmittel 52 ist dadurch verhindert. Das Gegenkopplungsmittel 52 ist in einer Kupplungsstellung fixiert.

Durch Herstellung der Kupplung zwischen den Kupplungsmitteln 36 und den Gegenkupplungsmitteln 52 wird die Verriegelungsstellung der Verriegelungsmittel 63 durch ein dem Kupplungsmittel 36 zugeordnetes Entriegelungsmittel 73 aufgehoben. Das Entriegelungsmittel 73 weist einen oder mehrere Entriegelungsvorsprünge 74 auf, die in Richtung der Längsachse W1 der Antriebswelle 54 orientiert sind und vorzugsweise gleichmäßig verteilt um die Antriebswelle 54 herum angeordnet sind. Die Entriegelungsvorsprünge 74 ragen über die Kupplungsvorsprünge 56 hinaus. Anstelle von mehreren Entriegelungsvorsprüngen 74 könnte beispielsweise auch ein hohlzylindrischer Entriegelungsvorsprung 74 um das Kupplungsmittel 36 herum angeordnet sein.

Das Entriegelungsmittel 73 dient zum Entriegeln des Verriegelungsmittels 63 beim Herstellen der Kupplung zwischen dem Kupplungsmittel 36 und dem Gegenkupplungsmittel 52. Dies wird anhand von Figur 10 erläutert. Bei der Herstellung der Verbindung zwischen der Quertraverse 16 und einem Grundträger 28 steuert die Steuereinheit 21 die Bewegung der Quertraverse 16 derart, dass sich diese so vor dem Grundträger 28 positioniert, dass durch eine Bewegung in Kopplungsrichtung K, die parallel zur Längsachse L der Quertraverse 16 orientiert ist, eine Verbindung der Verbindungsmittel 35 mit den Gegenverbindungsmitteln 37 sowie eine Kupplung zwischen den Kupplungsmitteln 36 und den Gegenkupplungsmitteln 52 erfolgen kann. Beim Ausführungsbeispiel werden dabei die Verbindungslöcher 39 fluchtend vor den Verbindungsstiften 38 positioniert. In dieser Position fluchtet auch die Längsachse W1 der Antriebswelle 54 mit der Längsachse W2 der antreibbaren Welle 45. Durch lineare Verschiebung in Kopplungsrichtung K auf den Grundträger 28 zu, greifen die Verriegelungsstifte 38 in die Verriegelungsausnehmungen 39 ein und stellen eine mechanische Verbindung zwischen dem Grundträger 28 und der Quertraverse 16 her.

Bei dieser Relativbewegung in Kopplungsrichtung K zwischen dem Grundträger 28 und der Quertraverse 16 gelangen zunächst die Entriegelungsvorsprünge 74 mit der Platte 64 in Kontakt. Durch die fortgesetzte Relativbewegung in Kopplungsrichtung K wird die Platte 64 durch die Entriegelungsvorsprünge 74 des Gegenkopplungsmittels 52 entgegen der Federkraft der Federanordnung 68 bewegt, wodurch die Verriegelungskörper 66 aus den Verriegelungsausnehmungen 67 herausbewegt werden. Sobald die Verriegelungskörper 66 vollständig aus den Verriegelungsausnehmungen 67 herausbewegt sind, ist die Drehstellung des Gegenkopplungsmittels 52 und der antreibbaren Welle 45 nicht mehr fixiert und die Drehung ist freigegeben. In diesem Zustand haben jedoch bereits die Kupplungsvorsprünge 56 in die Kupplungsausnehmungen 55 eingegriffen. Dadurch ist eine drehfeste Kupplung zwischen dem Kupplungsmittel 36 und dem Gegenkupplungsmittel 52 und damit zwischen dem Antriebsmotor 53 und der antreibbaren Welle 45 hergestellt. Das Herstellen der Kupplung und das Entriegeln der Verriegelungsmittel 63 erfolgt durch eine einfache lineare Relativbewegung zwischen Quertraverse 16 und dem Grundträger 28. Die hergestellte Kupplung und der entriegelte Zustand der Verriegelungsmittel 63 sind in Figur 10 für ein Anführungsbeispiel veranschaulicht.

In den Figuren 11 und 12 ist ein zweites Ausführungsbeispiel für das Verriegelungsmittel 63, das Entriegelungsmittel 73, das Kupplungsmittel 36 sowie das Gegenkopplungsmittel 52 dargestellt. Im Unterschied zu der ersten Ausführungsform gemäß der Figuren 9 und 10 sind die Kupplungsausnehmungen 55 am Kupplungsmittel 36 vorgesehen und münden in die Kupplungsfläche 58. Die zugeordneten Kupplungsvorsprünge ragen von der Gegenkupplungsfläche 59 des Gegenkupplungsmittels 52 weg.

Das Verriegelungsmittel 63 weist eine Verriegelungsklinke 75 auf, die schwenkbar an einem Schwenkzapfen 76 des Grundträgers 28 gelagert ist. Die Verriegelungsklinke 75 ist in eine Verriegelungsstellung vorgespannt, in der ein an der Verriegelungsklinke 75 vorhandener Verriegelungskörper 66 in eine zugeordnete Verriegelungsausnehmung 67 eingreift. Der Verriegelungskörper 66 ragt von der Verriegelungsklinke 75 nach innen zum Gegenkupplungsmittel 52 hin und insbesondere radial auf die Längsachse W2 der antreibbaren Welle 45 zu. Der Verriegelungskörper 66 ist an einem ersten Klinkenhebel 77 angeordnet, der sich ausgehend vom Schwenkzapfen 76 vom Grundträger 28 weg zu seinem freien Ende 78 hin erstreckt. Das freie Ende 78 des ersten Klinkenhebels 77 ist axial in Richtung der Längsachse W2 der antreibbaren Welle 45 gesehen vom Gegenkopplungsmittel 52 und insbesondere von der Gegenkopplungsfläche 59 beabstandet. Vom freien Ende 78 zum Verriegelungskörper 66 hin verläuft eine Fase oder Schrägfläche 79. Diese Schrägfläche 79 ist beim Ausführungsbeispiel eben dargestellt. In Abwandlung hierzu kann diese Schrägfläche 79 auch einen gekrümmten Verlauf aufweisen und beispielweise konvex ballig ausgeführt sein.

An den ersten Klinkenhebel 77 schließt sich am Schwenkzapfen 76 in entgegengesetzter Erstreckungsrichtung gesehen ein zweiter Klinkenhebel 80 an. Eine Aussparung 81 ist im zweiten Klinkenhebel 80 und im Anschluss an den Schwenkzapfen 76 in einem Bereich des ersten Klinkenhebels 77 vorgesehen. Innerhalb dieser Aussparung 81 ist der Schwenkzapfen 76 angeordnet. Die Schwenkachse, die durch den Schwenkzapfen 76 gebildet wird, erstreckt sich im Wesentlichen rechtwinklig zur Längsachse W2 der antreibbaren Welle 45. Die Federanordnung 68 zum Vorspannen des Verriegelungsmittels 63 in die Verriegelungsstellung weist bei diesem Ausführungsbeispiel eine Schenkelfeder 82 auf, die sich einerseits am Grundträger 28 und andererseits an einer Flanke 83 des zweiten Klinkenhebels 80 abstützt. Die Flanke 83 grenzt an die Aussparung 81 an und verläuft quer zur Schwenkachse. Die Verriegelungsklinke 75 wird dadurch entgegen dem Uhrzeigersinn um den Schwenkzapfen 76 durch die Schenkelfeder 82 vorgespannt, wodurch der erste Klinkenhebel 77 bzw. der Verriegelungskörper 66 entgegen dem Uhrzeigersinn um den Schwenkzapfen 76 zum Gegenkupplungsmittel 52 hin vorgespannt wird. Dabei greift der Verriegelungskörper 66 in die Verriegelungsausnehmung 67 ein. Das Gegenkopplungsmittel 52 ist auf diese Weise gegen eine Drehung gesichert, wodurch die Kupplungsvorsprünge 56 in einer Kupplungsstellung gehalten werden.

Das Entriegelungsmittel 72 ist von einem Entriegelungsvorsprung 74 gebildet, der sich in etwa parallel zur Antriebswelle 54 erstreckt und neben dem Kupplungsmittel 36 angeordnet ist. Bei Herstellung der Verbindung gelangt der Verriegelungsvorsprung 74 in Kontakt mit der Schrägfläche 79. Durch die Relativbewegung zwischen der Quertraverse 16 und dem Grundträger 28 gleitet der Verriegelungsvorsprung 74 immer weiter an der Schrägfläche 79 entlang und schwenkt dabei die Verriegelungsklinke 75 entgegen der Federkraft und dem Schwenkzapfen 76. Dadurch gelangt der Verriegelungskörper 66 außer Eingriff mit der Verriegelungsausnehmung bzw. dem Verriegelungsloch 67. Bei vollständig hergestellter Kupplung greifen die Kupplungsvorsprünge 56 in die zugeordneten Kupplungsausnehmungen 55 ein. Die hergestellte Kupplung ist in Figur 12 dargestellt.

Die Herstellung der Kupplung und das Entriegeln der Verriegelungsmittel 63 erfolgt daher bei allen Ausführungsbeispielen durch eine lineare Relativbewegung zwischen der Quertraverse 16 und dem Grundträger 28 in Kopplungsrichtung K. Sowohl beim ersten Ausführungsbeispiel gemäß der Figuren 9 und 10, als auch beim zweiten Ausführungsbeispiel gemäß der Figuren 11 und 12 bringt die Steuereinheit 21 den Antriebsmotor 53 und mithin die Kupplungsmittel 36 in eine Drehstellung, in denen die Kupplung zwischen dem Kupplungsmittel 36 und dem Gegenkupplungsmittel 52 durch eine lineare Relativbewegung in Kopplungsrichtung K hergestellt werden kann. Bei dem hier beschriebenen Ausführungsbeispielen erfolgt dies dadurch, dass die Kupplungsvorsprünge 56 fluchtend mit den Kupplungsausnehmungen 55 ausgerichtet werden, wenn die Längsachse W1 der Antriebswelle 54 und die Längsachse W2 der antreibbaren Welle 45 miteinander übereinstimmen.

Zum Lösen der Kupplung zwischen dem Kupplungsmittel 36 und dem Gegenkupplungsmittel 52 wird analog vorgegangen. Die Steuereinheit 21 bringt die Gegenkupplungsmittel 52 in eine Drehstellung, in der eine Verriegelung durch die Verriegelungsmittel 63 erfolgen kann. Dadurch wird die wenigstens eine Verriegelungsausnehmung 67 in eine Drehstellung gebracht, in der der Verriegelungskörper 66 durch die Vorspannkraft eingreifen kann. Wird anschließend durch eine lineare Relativbewegung entgegen der Kopplungsrichtung K die Quertraverse 16 vom Grundträger 28 weg bewegt, wird die Kupplung zwischen dem Kupplungsmittel 36 und dem Gegenkupplungsmittel 52 getrennt. Beispielsgemäß gelangen die Kupplungsvorsprünge 56 außer Eingriff mit den Kupplungsausnehmungen 55. Der wenigstens eine Verriegelungskörper 66 wird durch die Federkraft der Federanordnung 68 in seine Verriegelungsstellung bewegt und greift in die zugeordnete Verriegelungsausnehmung bzw. das zugeordnete Verriegelungsloch 67 ein. In dieser Verriegelungsstellung ist eine Drehung des Gegenkupplungsmittels 52 verhindert (Figuren 9 und 11).

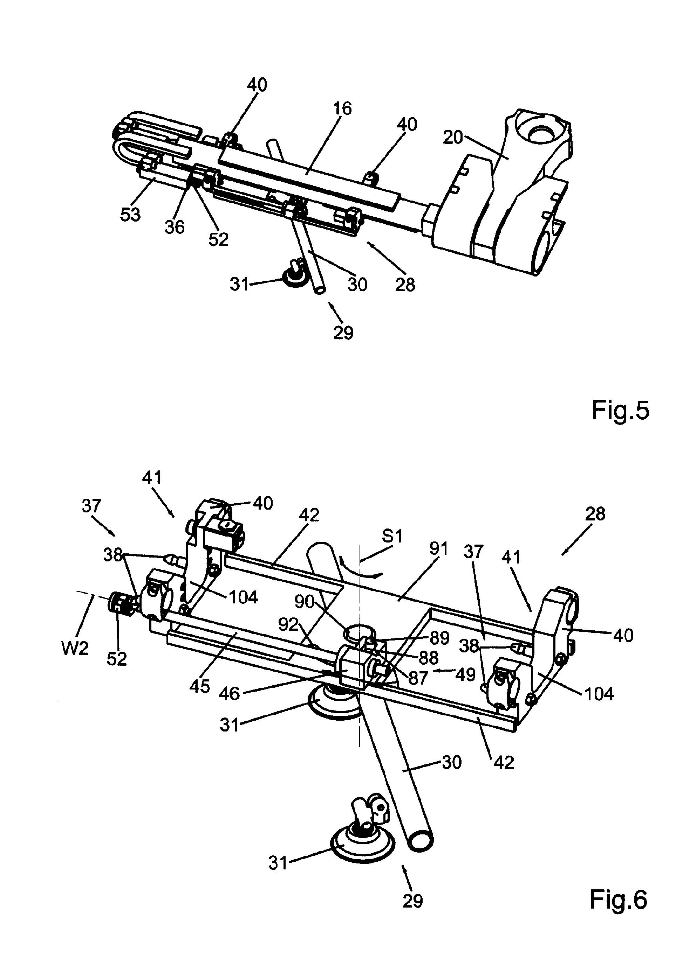

In Figur 3 ist eine Grundvariante des Grundträgers 28 veranschaulicht. Über die antreibbare Welle 45, das Abtriebsteil 48 sowie das Getriebe 49 können verschiedene Bewegungen der Greifeinrichtung 29 des Grundträgers 28 veranlasst werden. Hierfür stehen verschiedene Varianten oder Typen des Grundträgers 28 zur Verfügung. Bei den Ausführungsbeispielen des Grundträgers gemäß der Figuren 6 bis 8 sind verschiedene Getriebe 49 vorgesehen, die die lineare Bewegung des Abtriebsteils 46 in eine lineare Bewegung oder Schwenkbewegung der Greifeinrichtung 29 umsetzen. Es versteht sich, dass in Abwandlung hierzu auch andere Getriebe 49 vorgesehen werden können. Auch Kombinationen der hier beschriebenen Getriebe 49 sind möglich.

Eine erste Variante des Grundträgers 28 mit einer ersten Schwenkachse S1 ist in Figur 6 dargestellt. Das Abtriebsteil 46 ist fest mit einem Kulissenteil 87 verbunden. Das Kulissenteil 87 weist eine Kulissennut 88 auf, die als gerader Schlitz ausgeführt ist. Die Kulissennut 88 ist quer und insbesondere rechtwinklig zur Längsachse W2 der antreibbaren Welle 45 orientiert. Entlang der Kulissennut 88 ist ein Kulissenstein 89 geführt bewegbar, der beim Ausführungsbeispiel eine zapfenförmige Gestalt aufweist. Der Kulissenstein 89 ist fest mit dem Stab 30 der Werkstückhalteeinrichtung 29 verbunden. Mit Abstand zum Kulissenstein 89 ist der Stab 30 an einem Schwenkzapfen 90 schwenkbar am Grundträger 28 gelagert. Der Schwenkzapfen 90 definiert die erste Schwenkachse S1, die beim Ausführungsbeispiel quer zur Längsachse W2 der antreibbaren Welle 45 verläuft. Bei hergestellter Verbindung zwischen der Quertraverse 16 und dem Grundträger 28 gemäß der ersten Variante nach Figur 6 durchsetzt die erste Schwenkachse S1 die Quertraverse 16 und ist rechtwinklig zu einer Ebene ausgerichtet, in der die beiden Längsstangen 42 des Grundträgers 28 verlaufen.

Zwischen den beiden Längsstangen 42 ein Zwischenstück 91 eingesetzt, in dem der Schwenkzapfen 90 drehbar gelagert ist. Im Zwischenstück 91 ist mit Abstand zur ersten Schwenkachse S1 ein bogenförmiger Schlitz oder Durchbruch 92 vorgesehen, durch den der Kulissenstein 89 ausgehend vom Stab 30 hindurchragt und in die Kulissennut 88 vorsteht. Eine lineare Bewegung des Abtriebsteils 56 führt mithin zu einer Schwenkbewegung des Stabes 30 und damit der Saugelemente 31 um die erste Schwenkachse S1. Die hergestellte Verbindung zwischen der ersten Variante des Grundträgers 28 gemäß Figur 6 mit der Quertraverse 16 ist in Figur 5 dargestellt.

In Figur 7 ist eine weitere Variante des Grundträgers 28 gezeigt. Das Zwischenstück 91 zwischen den beiden Längstäben 42 dient dabei als Lagerung für eine sich quer zwischen den beiden Längsstäben 42 erstreckende Schwenklagerung 95. Die Schwenklagerung 95 definiert eine zweite Schwenkachse S2, die sich quer zur Längsachse W2 der antreibbaren Welle 45 erstreckt und im Wesentlichen parallel zu einer Ebene, in der sich die beiden Längsstäbe 42 befinden. Ein durch die Schwenklagerung 95 schwenkbar gelagerter Schwenkhebel 96 ragt quer zur zweiten Schwenkachse S2 weg. In diesen Schwenkhebel 96 ist ein Schlitz 97 eingebracht, durch den ein Zapfen 98 eingreift. Der Zapfen 98 ist mittelbar oder unmittelbar am Abtriebsteil 46 befestigt. Der Zapfen 98 bewegt sich gemeinsam mit dem Abtriebsteil 46 entlang der antreibbaren Welle 45. Bei dieser Bewegung wird der Schwenkhebel 96 um die zweite Schwenkachse S2 bewegt. An axialen Befestigungsstücken 99, die mit dem Schwenkhebel 96 verbunden sind und sich im Wesentlichen entlang der zweiten Schwenkachse S2 erstrecken, kann die Greifeinrichtung 29 befestigt werden. Dabei erstrecken sich die Stäbe 30 im Wesentlichen rechtwinklig zur zweiten Schwenkachse S2.

Bei einer dritten Variante des Grundträgers 28 gemäß Figur 8 ist an den beiden Längsstäben 42 ein linear verschiebbarer Trägerschlitten 103 angeordnet. Der Trägerschlitten 103 ist mit dem Abtriebsteil 46 verbunden, so dass eine lineare Bewegung des Abtriebsteils 46 zu einer entsprechenden linearen Bewegung des Trägerschlittens 103 führt. Das Abtriebsteil 46 und der Trägerschlitten 103 bewegen sich daher gemeinsam in Richtung der Längsachse W2 der antreibbaren Welle 45, wenn die Welle 45 sich dreht. Am Trägerschlitten 103 ist die Greifeinrichtung 29 befestigt, die entsprechend der Verschiebung des Trägerschlittens 103 bewegt bzw. positioniert werden kann. Bei dem in Figur 8 gezeigten Ausführungsbeispiel erstrecken sich die Stäbe 30 dabei in etwa parallel zur Längsachse W2 der antreibbaren Welle 45.

Die beiden Endstücke 40 eines Grundträgers 28 weisen bei allen Ausführungsbeispielen eine Traversenaufnahme 104 auf. Die Traversenaufnahme 104 ist eine bei hergestellter Verbindung zur Quertraverse 16 hin offene Aussparung in einem Endstück 40. Die beiden Traversenaufnahmen 104 eines Grundträgers 28 sind in Richtung der Längsstäbe 42 gesehen fluchtend miteinander ausgerichtet. Bei hergestellter Verbindung des Grundträgers 28 mit der Quertraverse 16 durchsetzt die Quertraverse 16 die Traversenaufnahme 104 in Längsrichtung L und kann dort zumindest stellenweise am Grundträger 28 anliegen. Ein Kontakt der Quertraverse 16 mit dem Grundträger 28 im Bereich der Traversenaufnahme 104 ist allerdings nicht notwendig.

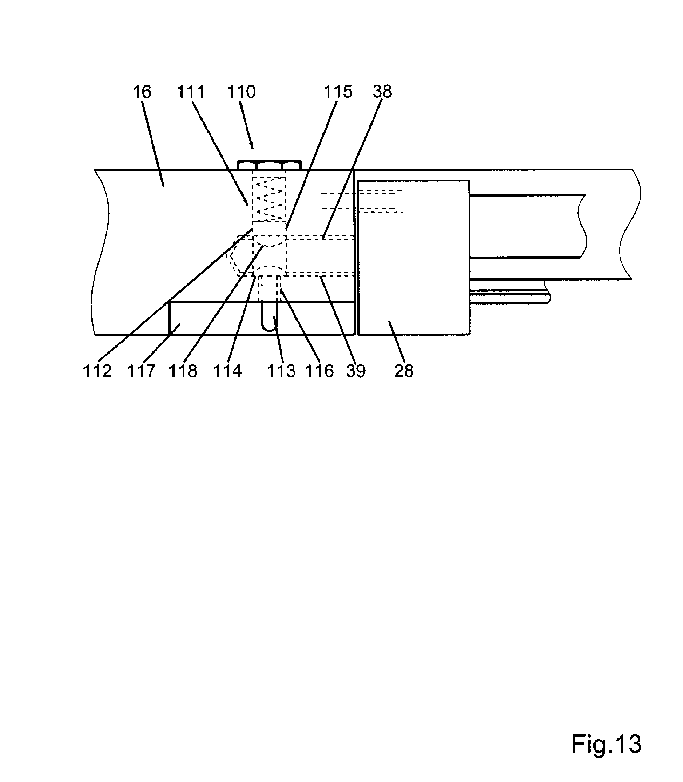

Um ein versehentliches Lösen der mechanischen Verbindung zwischen dem Verbindungsmittel 35 und dem Gegenverbindungsmittel 37 zu verhindern, kann ein durch einen Taster lösbarer Verriegelungsmechanismus 110 vorgesehen sein, wie sie in der DE 10 2006 025 272 B2 beschrieben ist. Auf den Inhalt dieser Patentschrift wird in soweit ausdrücklich verwiesen. In Figur 13 ist ein Verriegelungsmechanismus 110 schematisch am Beispiel eines Verbindungsstifts 38 und eines Verbindungslochs 39 dargestellt. Mehreren oder jedem Verbindungsstift 38 bzw. Verbindungsloch 39 kann ein Verriegelungsmechanismus zugeordnet sein.

Quer zum Verbindungsloch 39 ist in der Quertraverse 16 ein Taster 111 angeordnet. Der Taster 111 weist einen ersten zylindrischen Abschnitt 112 größerer Dicke und einen zweiten zylindrischen Abschnitt 113 geringerer Dicke auf, die sich axial aneinander anschließen. Der erste zylindrische Abschnitt 112 wird durch eine Feder beaufschlagt und gegen eine ringförmige Anschlagfläche 114 vorgespannt. Die ringförmige Anschlagfläche 114 stellt eine Stufe dar, zwischen einem ersten Lochabschnitt 115 und einem zweiten Lochabschnitt 116 eines Lochs, das quer zum Verbindungsloch 39 verläuft und dieses durchsetzt. Der zweite zylindrische Abschnitt 113 des Tasters 111 ragt aus dem zweiten Lochabschnitt 116 heraus und ist von außerhalb der Quertraverse 16 zugänglich. Beim bevorzugten Ausführungsbeispiel ist dieser Teil des zweiten zylindrischen Abschnitts 113 in eine Vertiefung oder Ausnehmung 117 der Quertraverse 16 angeordnet. Wird die Quertraverse 16 zur Ablage eines Grundträgers 28 auf eine Ablagefläche aufgestellt, so wird durch einen Betätigungsvorsprung der Ablagefläche der zweite zylindrische Abschnitt 113 axial nach innen gedrückt, wobei sich der erste zylindrische Abschnitt 112 von der Anschlagfläche 114 weg aus dem Verbindungsloch 39 herausbewegt. In diesem Zustand kann der Verbindungsstift 38 aus dem Verbindungsloch 39 axial herausgezogen werden.

In Figur 13 befindet sich der Verriegelungsmechanismus 110 im Verriegelungszustand, wobei der erste zylindrische Abschnitt 112 größeren Durchmessers des Tasters 111 das Verbindungsloch 39 unmittelbar benachbart zu einer Verjüngung 118 des Verbindungsstifts 38 durchsetzt, wodurch eine axiale Bewegung des Verbindungsstifts 38 in seiner Erstreckungsrichtung blockiert ist. Erst wenn der erste zylindrische Abschnitt 112 aus dem Verbindungsloch 39 herausbewegt wird, kann die Verbindung zwischen dem Verbindungsmittel 35 und dem Gegenverbindungsmittel 37 gelöst werden.

Die Erfindung betrifft eine Transfereinrichtung zum Transportieren und/oder Positionieren und/oder Ausrichten eines Werkstücks und wird insbesondere bei Pressen oder Pressenstraßen eingesetzt. Eine Quertraverse 16 ist in mehre Raumrichtungen bewegbar und/oder schwenkbar. Die Bewegung der Quertraverse 16 wird durch eine Steuereinheit 21 und eine entsprechende Anzahl von Achsantrieben gesteuert oder geregelt. An der Quertraverse 16 sitzt ein Servomotor 53, der ebenfalls durch die Steuereinheit 21 angesteuert wird. Mit Hilfe einer Kopplungseinrichtung 27 kann ein Grundträger 28 an der Quertraverse 16 angekoppelt werden. Am Grundträger 28 ist eine antreibbare Welle 45 angeordnet. Die Kopplungseinrichtung 27 der Quertraverse 16 weist ein Verbindungsmittel 35 bzw. 35a und 35b auf, das mit einem Gegenverbindungsmittel am Grundträger 28 zur Herstellung der mechanischen Befestigung zusammenwirkt. Die Kopplungseinrichtung 27 weist außerdem ein Kupplungsmittel 36 auf, das zur Herstellung einer Drehverbindung zwischen dem Servomotor 53 und der antreibbaren Welle 45 mit einem Gegenkupplungsmittel 52 an der drehbaren Welle 45 zusammenwirkt. Die Steuereinheit 21 ist dazu eingerichtet, durch eine gesteuerte Bewegung der Quertraverse 16 und eine Ansteuerung des Servomotors 53 ein automatisches Ankoppeln und Ablegen des Grundträgers 28 durchzuführen. Am Grundträger 28 ist eine Werkstückgreifeinrichtung 29 zum Halten des Werkstücks vorhanden. Auf diese Weise können verschiedene Werkstücksgreifeinrichtungen 29 oder verschiedene Grundträgertypen 28 mit der Quertraverse 16 verbunden werden.

### Bezugszeichenliste:

- 15: Tranfereinrichtung
- 16: Quertraverse
- 17: Arm
- 18: Schwenkhebel
- 19: Säule
- 20: Lagerteil
- 21: Steuereinheit

- 27: Kopplungseinrichtung
- 28: Grundträger
- 29: Werkstückgreifeinrichtung
- 30: Stab
- 31: Saugelement

- 35: Verbindungsmittel
- 35a: Gruppe
- 35b: Gruppe
- 36: Kupplungsmittel
- 37: Gegenverbindungsmittel
- 38: Verbindungsstifte
- 39: Verbindungsloch
- 40: Endstück
- 41: Verbindungsfläche
- 42: Längsstange

- 45: Welle
- 46: Abtriebsteil
- 47: Gewindespindel
- 48: Spindelmutter
- 49: Getriebe

- 52: Gegenkupplungsmittel
- 53: Antriebsmotor
- 54: Antriebswelle
- 55: Kupplungsausnehmung
- 56: Kupplungsvorsprung
- 57: zylindrischer Körper
- 58: Kupplungsfläche
- 59: Gegenkupplungsfläche

- 63: Verriegelungsmittel
- 64: Platte
- 65: zentrales Loch
- 66: Verriegelungskörper
- 67: Verriegelungsausnehmung
- 68: Federanordnung
- 69: Schraubenfeder
- 70: Wandung

- 73: Entriegelungsmittel
- 74: Entriegelungsvorsprung
- 75: Verriegelungsklinke
- 76: Schwenkzapfen
- 77: ersten Klinkenhebel
- 78: freies Ende
- 79: Schrägfläche
- 80: zweiter Klinkenhebel
- 81: Aussparung
- 82: Schenkelfeder
- 83: Flanke

- 87: Kulissenteil
- 88: Kulissennut
- 89: Kulissenstein
- 90: Schwenkzapfen
- 91: Zwischenstück
- 92: Durchbruch

- 95: Schwenklagerung
- 96: Schwenkhebel
- 97: Schlitz
- 98: Zapfen
- 99: axiales Befestigungsstück

- 103: Trägerschlitten
- 104: Traversenaufnahme

- 110: Verriegelungsmechanismus
- 111: Taster
- 112: erster zylindrischer Abschnitt
- 113: zweiter zylindrischer Abschnitt
- 114: Anschlagfläche
- 115: erster Lochabschnitt
- 116: zweiter Lochabschnitt
- 117: Aussparung
- 118: Verjüngung

- A1: erste Achse
- A2: zweite Achse
- A3: dritte Achse
- K: Kopplungsrichtung
- L: Längsachse der Quertraverse
- S1: erste Schwenkachse
- S2: zweite Schwenkachse
- W1: Längsachse der Antriebswelle
- W2: Längsachse der antreibbaren Welle

## Patentansprüche

1. Grundträger (28) für eine in mehrere Raumrichtungen bewegbare und/oder verschwenkbare Quertraverse (16) einer Transfereinrichtung (15) zum Transportieren und/oder Ausrichten eines Werkstücks für eine Presse oder Pressenstraße,
mit einer Werkstückgreifeinrichtung (29) zum Greifen des Werkstücks,
mit einer antreibbaren Welle (45) und einem durch die Welle bewegbaren Abtriebsteil (46), das über ein Getriebe (49) mit der Werkstückgreifeinrichtung (29) verbunden ist,
mit einem Gegenkupplungsmittel (52), das zur Herstellung einer drehfesten Verbindung der Welle (45) mit einem von einem Antriebsmotor (53) antreibbaren Kupplungsmittel (36) der Quertraverse (16) zusammenwirkt,
mit einem Gegenverbindungsmittel (37), das zur lösbaren mechanischen Befestigung des Grundträgers (28) an der Quertraverse (16) mit einem an der Quertraverse (16) vorhandenen Verbindungsmittel (35) zusammenwirkt,
wobei ein Verriegelungsmittel (63) vorhanden ist, das im entkuppelten Zustand des Gegenkupplungsmittels (52) von dem Kupplungsmittel (36) die Drehstellung des Gegenkupplungsmittels (52) fixiert,
**dadurch gekennzeichnet, dass** das Verriegelungsmittel (63) wenigstens einen Verriegelungsvorsprung (66) aufweist, der in der Verriegelungsstellung in eine Verriegelungsausnehmung (67) am Gegenkopplungsmittel (52) eingreift.

2. Grundträger nach Anspruch 1,
**dadurch gekennzeichnet, dass** das Verriegelungsmittel (63) durch ein Vorspannanordnung (68) in seine Verriegelungsstellung vorgespannt ist.

3. Grundträger nach Anspruch 1,
**dadurch gekennzeichnet, dass** die Welle (45) als Gewindespindel (47) und das Abtriebsteil (46) als Spindelmutter (48) ausgeführt ist.

4. Grundträger nach Anspruch 1,
**dadurch gekennzeichnet, dass** das Abtriebsteil (46) mit einem linear verschiebbar gelagerten Trägerschlitten (103) verbunden ist, an dem die Werkstückgreifeinrichtung (29) angeordnet ist.

5. Grundträger nach Anspruch 1,
**dadurch gekennzeichnet, dass** die Werkstückgreifeinrichtung (29) um eine Schwenkachse (S1, S2) schwenkbar gelagert ist und das Abtriebsteil (46) mit einem an der Werkstückgreifeinrichtung (29) angeordneten Schwenkelement (89, 96) verbunden ist.

6. Transfereinrichtung (15) zum Transportieren und/oder Ausrichten eines Werkstücks für eine Presse oder Pressenstraße, mit einem Grundträger (28) nach einem der vorhergehenden Ansprüche,
mit wenigstens einer in mehrere Raumrichtungen bewegbaren und/oder verschwenkbaren Quertraverse (16),
mit einem an der Quertraverse (16) angeordneten Antriebsmotor (53),
mit einer an der Quertraverse (16) vorhandenen Kopplungseinrichtung (27) zur lösbaren Kopplung des mit einer antreibbaren Welle (45) ausgestatteten Grundträgers (28) mit der Quertraverse (16),
wobei die Kopplungseinrichtung (27) ein Verbindungsmittel (35) aufweist, das zur lösbaren mechanischen Befestigung des Grundträgers (28) an der Quertraverse (16) mit einem am Grundträger (28) vorhandenen Gegenverbindungsmittel (37) zusammenwirkt,
wobei die Kopplungseinrichtung (27) ein vom Antriebsmotor (53) antreibbares Kupplungsmittel (36) aufweist, das zur Herstellung einer drehfesten Verbindung mit der Welle (45) des Grundträgers (28) mit einem Gegenkupplungsmittel (37) zusammenwirkt.

7. Transfereinrichtung nach Anspruch 6,
**dadurch gekennzeichnet, dass** das Verbindungsmittel (35) mit dem Gegenverbindungsmittel (37) und das Kupplungsmittel (36) mit dem Gegenkupplungsmittel (52) durch eine Relativbewegung der Quertraverse (16) relativ zum Grundträger (28) in einer Kopplungsrichtung (K) gekoppelt wird.

8. Transfereinrichtung nach Anspruch 7,
**dadurch gekennzeichnet, dass** die Kopplungsrichtung (K) parallel zur Längsachse (L) der Quertraverse (16) verläuft.

9. Transfereinrichtung nach Anspruch 6,
**dadurch gekennzeichnet, dass** eine Steuereinheit (21) zur Steuerung der Bewegung und/oder der Position der Quertraverse (16) und zur Ansteuerung des Antriebsmotors (53) vorhanden ist.

10. Transfereinrichtung nach Anspruch 9,
**dadurch gekennzeichnet, dass** die Steuereinheit (21) zur Herstellung der Kopplung zwischen dem Kupplungsmittel (36) und dem Gegenkupplungsmittel (52) das mit dem Antriebsmotor (53) verbundene Kupplungsmittel (36) in eine vorgegebene Kupplungsstellung bringt.

11. Transfereinrichtung nach Anspruch 6,
**dadurch gekennzeichnet, dass** die Kupplungsmittel (36) ein Entriegelungsmittel (73) aufweisen, das bei der Herstellung der drehfesten Kupplung zwischen dem Kupplungsmittel (36) und dem Gegenkupplungsmittel (52) eine Drehverriegelung des Gegenkupplungsmittels (52) entriegelt.

12. Transfereinrichtung nach Anspruch 6,
**dadurch gekennzeichnet, dass** die Quertraverse (16) nur einseitig gelagert ist.

13. Transfereinrichtung nach Anspruch 6,
**dadurch gekennzeichnet, dass** mehrere verschiedene Grundträger (28) vorhanden sind, die wahlweise mit der Quertraverse (16) verbindbar sind.

## Claims

1. Base support (28) for a crossbeam (16) of a transfer arrangement (15), which can be swung and/or moved in multiple spatial directions, for transporting and/or aligning a workpiece for a press or press production line,
with a workpiece gripping device (29) for gripping the workpiece,
with a drivable shaft (45) and an output part (46), which is movable by the shaft and is connected to the workpiece gripping device (29) by means of a gear (49),
with a counter-coupling element (52), which cooperates with a coupling element (36) of the crossbeam (16) drivable by a drive motor (53) to create a rotationally fixed connection of the shaft (45),
with a mating connection element (37), which cooperates with a connection element (35) present on the crossbeam (16) for detachable mechanical fastening of the base support (28) to the crossbeam (16),
wherein a locking element (63) is provided, which in the decoupled state of the counter-coupling element (52) from the coupling element (36) fixes the position of rotation of the counter-coupling element (52),
**characterised in that** the locking element (63) has at least one locking projection (66), which in the locking position engages into a locking recess (67) on the counter-coupling element (52).

2. Base support according to claim 1, **characterised in that** the locking element (63) is prestressed into its locking position by a prestressing arrangement (68).

3. Base support according to claim 1, **characterised in that** the shaft (45) is configured as a threaded spindle (47) and the output part (46) is configured as a spindle nut (48).

4. Base support according to claim 1, **characterised in that** the output part (46) is connected to a support cradle (103), which is mounted to be linearly displaceable and on which the workpiece gripping device (29) is arranged.

5. Base support according to claim 1, **characterised in that** the workpiece gripping device (29) is mounted to be able to swivel around a swivel axis (S 1, S2) and the output part (46) is connected to a swivel element (89, 96) arranged on the workpiece gripping device (29).

6. Transfer arrangement (15) for transporting and/or aligning a workpiece for a press or a press production line, with a base support (28) according to one of the preceding claims,
with at least one crossbeam (16), which can be swung and/or moved in multiple spatial directions,
with a drive motor (53) arranged on the crossbeam (16),
with a coupling arrangement (27) present on the crossbeam (16) for detachable coupling of the base support (28) equipped with a drivable shaft (45) to the crossbeam (16),
wherein the coupling arrangement (27) has a connection element (35), which cooperates with a mating connection element (37) present on the base support (28) for detachable mechanical fastening of the base support (28) to the crossbeam (16), wherein the coupling arrangement (27) has a coupling element (36), which is drivable by the drive motor (53) and which cooperates with a counter-coupling element (37) to create a rotationally fixed connection with the shaft (45) of the base support (28).

7. Transfer arrangement according to claim 6, **characterised in that** the connection element (35) is coupled to the mating connection element (37) and the coupling element (36) is coupled to the counter-coupling element (52) by a relative movement of the crossbeam (16) relative to the base support (28) in a coupling direction (K).

8. Transfer arrangement according to claim 7, **characterised in that** the coupling direction (K) runs parallel to the longitudinal axis (L) of the crossbeam (16).

9. Transfer arrangement according to claim 6, **characterised in that** a control unit (21) is provided for controlling the movement and/or the position of the crossbeam (16) and for actuating the drive motor (53).

10. Transfer arrangement according to claim 9, **characterised in that** to create the coupling between the coupling element (36) and the counter-coupling element (52) the control unit (21) brings the coupling element (36) connected to the drive motor (53) into a predetermined coupling position.

11. Transfer arrangement according to claim 6, **characterised in that** the coupling elements (36) have an unlocking element (73), which on creation of the rotationally fixed coupling between the coupling element (36) and the counter-coupling element (52) unlocks a rotational locking of the counter-coupling element (52).

12. Transfer arrangement according to claim 6, **characterised in that** the crossbeam (16) is mounted only on one side.

13. Transfer arrangement according to claim 6, **characterised in that** multiple different base supports (28) are provided, which can be selectively connected to the crossbeam (16).

## Revendications

1. Support de base (28) pour une entretoise transversale (16) déplaçable et/ou pivotante dans plusieurs directions spatiales et faisant partie d'un dispositif de transfert (15) destiné à transporter et/ou orienter une pièce pour une presse ou un train de presses, comprenant un dispositif de préhension de pièce (29) destiné à prendre la pièce, comprenant un arbre entraînable (45) et une partie de sortie (46) déplaçable par l'arbre, laquelle est reliée au dispositif de préhension de pièce (29) par une transmission (49), comprenant un moyen d'accouplement complémentaire (52) qui coopère avec un moyen d'accouplement (36) de l'entretoise transversale (16) entraînable par un moteur d'entraînement (53) pour établir une liaison solidaire en rotation de l'arbre (45), comprenant un moyen de liaison complémentaire (37) qui coopère avec un moyen de liaison (35) présent sur l'entretoise transversale (16) pour la fixation mécanique libérable du support de base (28) à l'entretoise transversale (16), comprenant un moyen de verrouillage (63) qui, lorsque le moyen d'accouplement complémentaire (52) est désaccouplé du moyen d'accouplement (36), fixe la position de rotation du moyen d'accouplement complémentaire (52), **caractérisé en ce que** le moyen de verrouillage (63) présente au moins une saillie de verrouillage (66) qui, dans la position de verrouillage, s'engage dans un évidement de verrouillage (67) sur le moyen d'accouplement complémentaire (52).

2. Support de base selon la revendication 1, **caractérisé en ce que** le moyen de verrouillage (63) est précontraint dans sa position de verrouillage par un dispositif de précontrainte (68).

3. Support de base selon la revendication 1, **caractérisé en ce que** l'arbre (45) est réalisé sous la forme d'une broche filetée (47) et la partie de sortie (46) sous la forme d'un écrou de broche (48).

4. Support de base selon la revendication 1, **caractérisé en ce que** la partie de sortie (46) est reliée à un chariot porteur (103) monté coulissant linéairement, sur lequel est disposé le dispositif de préhension de pièce (29).

5. Support de base selon la revendication 1, **caractérisé en ce que** le dispositif de préhension de pièce (29) est monté pivotant autour d'un axe de pivotement (S1, S2) et la partie de sortie (46) est reliée à un élément pivotant (89, 96) disposé sur le dispositif de préhension de pièce (29).

6. Dispositif de transfert (15) destiné à transporter et/ou orienter une pièce pour une presse ou un train de presses, avec un support de base (28) selon l'une des revendications précédentes, comprenant au moins une entretoise transversale (16) déplaçable et/ou pivotante dans plusieurs directions spatiales, comprenant un moteur d'entraînement (53) disposé sur l'entretoise transversale (16), comprenant un dispositif d'accouplement (27) présent sur l'entretoise transversale (16) pour l'accouplement libérable du support de base (28) équipé d'un arbre entraînable (45) à l'entretoise transversale (16), le dispositif d'accouplement (27) présentant un moyen de liaison (35) qui coopère avec un moyen de liaison complémentaire (37) présent sur le support de base (28) pour la fixation mécanique libérable du support de base (28) à l'entretoise transversale (16), le dispositif d'accouplement (27) présentant un moyen d'accouplement (36) qui est entraînable par le moteur d'entraînement (53) et qui coopère avec un moyen d'accouplement complémentaire (37) pour établir une liaison solidaire en rotation avec l'arbre (45) du support de base (28).

7. Dispositif de transfert selon la revendication 6, **caractérisé en ce que** le moyen de liaison (35) est accouplé au moyen de liaison complémentaire (37) et le moyen d'accouplement (36) au moyen d'accouplement complémentaire (52) par un mouvement relatif de l'entretoise transversale (16) par rapport au support de base (28) dans une direction d'accouplement (K).

8. Dispositif de transfert selon la revendication 7, **caractérisé en ce que** la direction d'accouplement (K) est parallèle à l'axe longitudinal (L) de l'entretoise transversale (16).

9. Dispositif de transfert selon la revendication 6, **caractérisé en ce qu'**une unité de commande (21) pour commander le déplacement et/ou la position de l'entretoise transversale (16) et pour actionner le moteur d'entraînement (53) est présente.

10. Dispositif de transfert selon la revendication 9, **caractérisé en ce que** l'unité de commande (21) met le moyen d'accouplement (36) relié au moteur d'entraînement (53) dans une position d'accouplement prédéfinie pour établir le couplage entre le moyen d'accouplement (36) et le moyen d'accouplement complémentaire (52).

11. Dispositif de transfert selon la revendication 6, **caractérisé en ce que** les moyens d'accouplement (36) présentent un moyen de déverrouillage (73) qui, lors de l'établissement de l'accouplement solidaire en rotation entre le moyen d'accouplement (36) et le moyen d'accouplement complémentaire (52), déverrouille un verrouillage en rotation du moyen d'accouplement complémentaire (52).

12. Dispositif de transfert selon la revendication 6, **caractérisé en ce que** l'entretoise transversale (16) est montée seulement d'un côté.

13. Dispositif de transfert selon la revendication 6, **caractérisé en ce que** plusieurs supports de base (28) différents sont présents, lesquels peuvent être reliés sélectivement à l'entretoise transversale (16).
